# EUROPEAN PATENT APPLICATION

(11) **EP 3 214 591 A1**
(43) Date of publication of application: **06.09.2017**
(21) Application number: 17156908.0
(22) Date of filing: 20.02.2017
(51) Int. Cl.: G06Q 10/08

(54) **SYSTEM AND METHOD FOR MANAGING INVENTORY BASED ON CAPTURED IMAGES**

(30) Priority: 02.03.2016 JP 2016040258
(71) Applicant: Toshiba TEC Kabushiki Kaisha, Tokyo 141-0032 (JP)
(72) Inventor: TAIRA, Kazuki, Shinagawa-ku, Tokyo 141-8562 (JP); YAMAZAKI, Keita, Shinagawa-ku, Tokyo 141-8562 (JP); WATANABE, Koichi, Shinagawa-ku, Tokyo 141-8562 (JP); WATANABE, Hirokazu, Shinagawa-ku, Tokyo 141-8562 (JP); SAEGUSA, Shinji, Shinagawa-ku, Tokyo 141-8562 (JP); YASUNAGA, Masaaki, Shinagawa-ku, Tokyo 141-8562 (JP); UMEZAWA, Hiroki, Shinagawa-ku, Tokyo 141-8562 (JP)
(74) Representative: Takeuchi, Maya

(57) **Abstract**

An inventory management system includes an image capturing device, a data storage, and a processing device. The processing device is configured to process image data of one or more images of an inventory space for items of a same type captured by the image capturing device, and to extract, from the captured images, an identification code or a code symbol that is unique to the items and placed behind the inventory space when viewed from the image capturing device. When the processing device is able to extract the entire identification code or the entire code symbol, the processing device causes an update of an inventory record stored in the data storage to indicate that the items are out of stock if the inventory record for the items are present.

## Description

### FIELD

The present invention relates to inventory technologies in general, e.g. in a warehouse, and embodiments described herein relate in particular to a system and a method for managing inventory of items based on images of a storage region for the items.

### BACKGROUND

Generally, in a warehouse where many articles are stored, articles are placed on a shelf according to its type. Therefore, if a person looks inside the warehouse, the person can recognize presence or absence of an out-of-stock item. However, such a manual process increases workload of a person, and is susceptible to human error.

According to a system in the related art, presence or absence of items is determined based on capturing an image of a mark that appears when no item is in inventory. However, in order for the system of the related art to know the type of the items that are out of stock, the system may have to know, in advance, correspondence between a storage position of the items and the type of the items.

To solve such problems, there is provided a system for managing inventory based on captured images, comprising:
an image capturing device;
a data storage; and
a processing device configured to process image data of one or more images of an inventory space for items of a same type captured by the image capturing device, and to extract, from the captured images, an identification code or a code symbol that is unique to the items and placed behind the inventory space when viewed from the image capturing device, wherein
when the processing device is able to extract the entire identification code or the entire code symbol, the processing device causes an update of an inventory record stored in the data storage to indicate that the items are out of stock if the inventory record for the items are present.

Preferably, when processing device cannot extract the entire identification code or code symbol, the processing device causes an update of the inventory record to indicate that the items are in inventory if the inventory record indicates that the items are out of stock.

Preferably still, the code symbol, not the identification code, is presented behind the space, and
the processing device determines the ID of the items by decoding data of the extracted code symbol.

In the above system, the code symbol is preferably a two-dimensional code symbol.

Preferably yet, the identification code or code symbol is positioned so that at least part of the identification code or code symbol is hidden from image capturing by the image capturing device when at least one item is placed in the inventory space.

Suitably, the system further comprises:
a moving mechanism to which the image capturing device is attached, and configured to move an angle of the image capturing device.

Suitably still, the system further comprises:
a moving mechanism to which the image capturing device is attached, and configured to move a position of the image capturing device.

The invention also relates to a method for managing inventory based on captured images, comprising:
generating image data of one or more images of an inventory space for items of a same type, the one or more images being captured by an image capturing device;
processing the image data to extract, from the captured images, an identification code or a code symbol that is unique to the items and placed behind the inventory space when viewed from the image capturing device; and
when the entire identification code or code symbol is extracted through processing of the image data, updating an inventory record to indicate that the items are out of stock if the inventory record for the items are present.

Preferably, the method further comprises:
when the entire identification code or code symbol is not extracted through processing of the image data, updating the inventory record to indicate that the items are in inventory if the inventory record indicates that the items are out of stock.

Preferably still, the code symbol, not the identification code, is presented behind the space, and
the ID of the items is determined by decoding data of the extracted code symbol.

Preferably yet, the code symbol is a two-dimensional code symbol.

Suitably, the method further comprises:
placing the items in the space, such that at least part of the identification code or code symbol is hidden from image capturing by the image capturing device when at least one item is placed in the inventory space.

Suitably still, the method further comprises:
moving an angle of the image capturing device, so that an image of the inventory space is captured at a different angle.

Suitably yet, the method further comprises:
moving a position of the image capturing device, so that an image of the inventory space is captured at a different position.

The invention further relates to a non-transitory computer readable medium comprising a program that is executable in a computing system to cause the computing system to perform the method according to any one of claims 7 to 13 for managing inventory based on captured images.

The invention further concerns a computer program product comprising program code means stored on a computer readable medium for performing the method according to any one of claims 7 to 13 when the program product is run on a computer.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 illustrates an overview of an out-of-stock item detection system according to an embodiment.
FIG. 2 schematically illustrates a data configuration of an article database.
FIG. 3 is a block diagram showing a main configuration of an image processing device and an article management server.
FIG. 4 is a flowchart showing a main procedure of an information process performed by each processor of the image processing device and the article management server.
FIGs. 5A and 5B schematically illustrate indices according to another embodiment.
FIGs. 6A and 6B schematically illustrate a camera according to another embodiment.

### DETAILED DESCRIPTION

An embodiment provides a system and a method system capable of detecting an out-of-stock item more efficiently.

In general, according to an embodiment, an inventory management system includes an image capturing device, a data storage, and a processing device. The processing device is configured to process image data of one or more images of an inventory space for items of a same type captured by the image capturing device, and to extract, from the captured images, an identification code or a code symbol that is unique to the items and placed behind the inventory space when viewed from the image capturing device. When the processing device is able to extract the entire identification code or the entire code symbol, the processing device causes an update of an inventory record stored in the data storage to indicate that the items are out of stock if the inventory record for the items are present.

Hereinafter, an embodiment of the out-of-stock item detection device and the out-of-stock item detection system will be described with reference to the drawings.

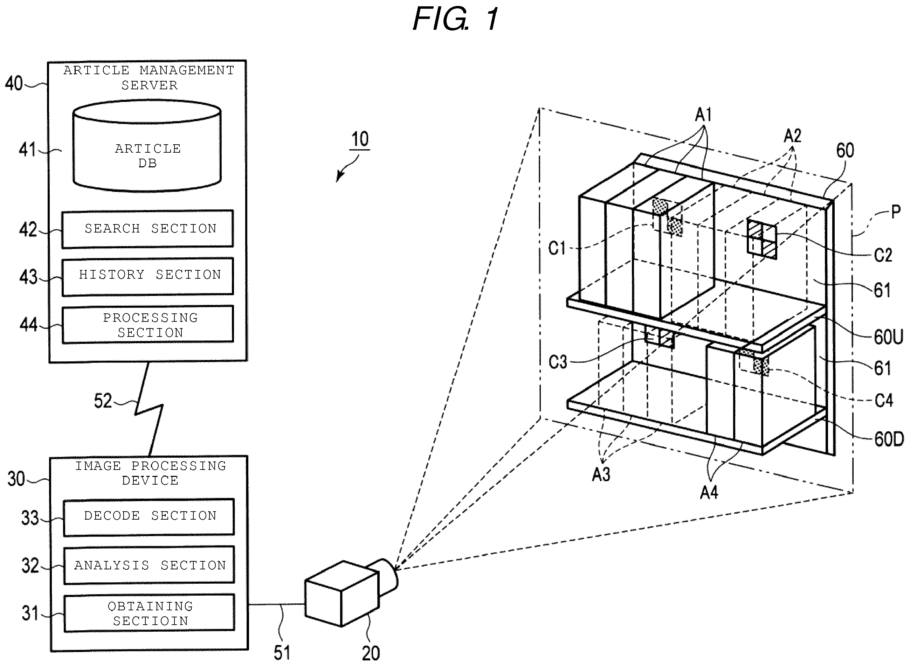

In the present embodiment, as shown in FIG. 1, it is assumed that a case where out-of-stock items of four types of articles A1, A2, A3, and A4 placed on a shelf 60 of a vertical two-stage structure are detected. Each of articles A1, A2, A3, and A4 is placed in predetermined sections of the shelf 60. In the present embodiment, when viewing the shelf 60 from the front, the articles A1 are placed in a left-side section of an upper shelf 60U, the articles A2 are placed in a right-side section of the upper shelf 60U, the articles A3 are placed in a left-side section of a lower shelf 60D, and the articles A4 are placed in a right-side section of the lower shelf 60D. Then, the two-dimensional data codes C1, C2, C3, and C4 are placed on a back plate 61 of the sections on which the articles A1, A2, A3, and A4 are placed, respectively. Specifically, four labels on which the two-dimensional data codes C1, C2, C3, and C4 are printed, respectively, are attached on the back plate 61.

The two-dimensional data codes C1, C2, C3, and C4 are optical codes each of which indicates a unique code by an array of two dimensional bars, and are examples of an index.

When one article A1 is placed in the corresponding section, if the shelf 60 is viewed from a position where a camera 20 is located in front of the shelf 60, at least a portion of the two-dimensional data code C1 is hidden by the article A1. In other words, when an out-of-stock item exists in a corresponding section, if the shelf 60 is viewed from a location position of the camera 20, the entirety of the two-dimensional data code C1 is exposed. The same also applies to the two-dimensional data codes C2, C3, and C4. FIG. 1 illustrates a state in which the article A1 and the article A4 are not out of stock, and the article A2 and the article A3 are out of stock. In this state, when the shelf 60 is viewed from the location position of the camera 20, at least a portion of each of the two-dimensional data codes C 1 and C4 is hidden by the article. Meanwhile, the entirety of each of the two-dimensional data codes C2 and C3 is exposed.

FIG. 1 is an overview of an out-of-stock item detection system 10. The out-of-stock item detection system 10 includes the camera 20 as an image-capturing device, an image processing device 30, and an article management server 40. The camera 20 is connected to the image processing device 30 via a dedicated communication cable 51. The image processing device 30 is connected to the article management server 40 through a network 52 such as a local area network (LAN). The camera 20 may be connected to the image processing device 30 by wireless communication. Alternately, the image processing device 30 may include the camera 20. The network 52 may be a wired connection network or a wireless connection network.

As shown in FIG. 1, the camera 20 is directed in a direction approximately towards the shelf 60. Then, a location height of the camera 20, a distance from the camera 20 to the shelf 60, an angle of view of the camera 20, or the like is set such that the entire front surface of the shelf 60 is within an image-capturing range P. For example, the camera 20 is a digital video camera.

The image processing device 30 includes an obtaining section 31, an analysis section 32, and a decode section 33, as an image process function. The image processing device 30 may include an image process function other than the obtaining section 31, the analysis section 32, and the decode section 33.

The obtaining section 31 obtains an image captured by the camera 20. As described above, the camera 20 sets the entire front surface of the shelf 60 as the image-capturing range P. That is, the obtaining section 31 obtains image data generated by image-capturing the shelf 60 on which the articles are placed from a front side. The obtaining section 31 sequentially stores the image data obtained by the camera 20 in a memory (not shown).

The analysis section 32 analyses the image data obtained by the obtaining section 31, that is, the image data stored in the memory, and operates to detect the two-dimensional data codes C (C1, C2, C3, and C4). When the entirety of a two-dimensional data code C is detected, the analysis section 32 regards that the two-dimensional data code C is detected. When only a portion of a two-dimensional data code C is detected, the analysis section 32 regards that the two-dimensional data code C is not detected. For example, the two-dimensional data code C has a rectangular shape, and includes predetermined marks on at least three corners. When all of these three corner marks are detected by analyzing the image data, the analysis section 32 determines that the two-dimensional data code C is detected. In this manner, the analysis section 32 analyses the image data obtained by the obtaining section 31, and detects an index (two-dimensional data code C) that appears for an out-of-stock item on a back surface of the shelf 60. When the two-dimensional data code C is detected from the image data obtained by the obtaining section 31, the analysis section 32 extracts data of an image of the two-dimensional data code C, and provides the extracted data to the decode section 33. When a plurality of two-dimensional data codes C is detected from the image data, the analysis section 32 extracts data of each image of the two-dimensional data codes C, and provides the extracted data to the decode section 33.

The decode section 33 decodes a code represented by the two-dimensional data code C from the data of the two-dimensional data code C provided from the analysis section 32. That is, the decode section 33 decodes a code represented by the index (two-dimensional data code C) from data of an index (two-dimensional data code C) detected by the analysis section 32. The decode section 33 transmits the code obtained by decoding data of the two-dimensional data code C to the article management server 40.

The article management server 40 includes an article database 41. In addition, the article management server 40 includes a search section 42, a history section 43, and a processing section 44, to perform an article management function. The article management server 40 may perform an article management function other than the search section 42, the history section 43, and the processing section 44. The article management server 40 may not necessarily include the article database 41. For example, a computer for a server other than the article management server 40 may include the article database 41, and reading and writing of information with respect to the article management server 40 may be controlled by accessing the computer for a server by the article management server 40.

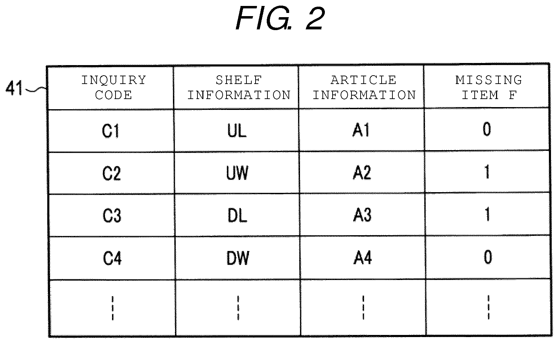

As shown in FIG. 2, the article database 41 saves a data record configured by each item of an inquiry code, shelf information, article information, and an out-of-stock flag F. The data record may include an item other than the inquiry code, the shelf information, the article information, and the out-of stock flag F.

The inquiry code is a unique code. In the present embodiment, a code obtained by decoding data of the two-dimensional data code C is the inquiry code. In FIG. 2, the inquiry code "C1" is obtained by decoding data of the two-dimensional data code C1. The inquiry code "C2" is obtained by decoding data of the two-dimensional data code C2. The same also applies to the inquiry codes "C3" and "C4".

The shelf information is information for identifying a section of the shelf 60 at which the two-dimensional data code C representing a corresponding inquiry code is attached. In FIG. 2, the shelf information "UL" specifies the left-side section viewed from the front of the upper shelf 60U. The shelf information "UW" specifies the right-side section viewed from the front of the upper shelf 60U. The shelf information "DL" specifies the left-side section viewed from the front of the lower shelf 60D. The shelf information "DW" specifies the right-side section viewed from the front of the lower shelf 60D.

The article information indicates an article placed on the section specified by the corresponding shelf information. In FIG. 2, the article information "A1" specifies the article A1 placed at the left-side section viewed from the front of the upper shelf 60U. The article information "A2" specifies the article A2 placed at the right-side section viewed from the front of the upper shelf 60U. The article information "A3" specifies the article A3 placed at the left-side section viewed from the front of the lower shelf 60D. The article information "A4" specifies the article A4 placed at the right-side section viewed from the front of the lower shelf 60D.

The out-of-stock flag F indicates whether or not the article specified by the corresponding article information is out-of-stock. The out-of-stock flag F is one-bit data of "0" or "1", and indicates an out-of-stock state when the out-of-stock flag F is "1" in the present embodiment. Therefore, an example of the data record in FIG. 2 indicates that two articles A2 and A3 identified as the article information "A2" and "A3" are out-of-stock. Here, the out-of-stock flag F of "0" indicates an in-inventory state.

The search section 42 searches the article database 41 for a code provided from the image processing device 30. The search section 42 searches the article database 41, to determine presence or absence of a data record including the code as the inquiry code. When a plurality of codes is provided from the image processing device 30, the search section 42 determines the presence or absence of the data record including information as the inquiry code, with respect to each code. When the data record including the code as the inquiry code is detected from the article database 41, the search section 42 provides the shelf information, the article information, and the out-of-stock flag F of the data record to the history section 43. The search section 42 provides selectively the shelf information, the article information, and the out-of-stock flag F to the history section 43, among the entire data of the article database 41. In this manner, the search section 42 searches a database (article database 41) that stores the data record in which the code represented by the index (two-dimensional data code C) that appears for the out-of-stock item and the flag for identifying whether or not there is the out-of-stock item are associated with each other for each of a plurality of articles, and detects the data record including a code represented by the index (two-dimensional data code C) detected by the analysis section 32.

The history section 43 includes a data region for current processing and a data region for previous processing. When the shelf information, the article information, and the out-of-stock flag F are provided from the search section 42, the history section 43 transfers data stored in the data region for current processing to the data region for previous processing, and writes the received data in the data region for current processing. Therefore, the shelf information, the latest article information, and the latest out-of-stock flag F which are provided from the search section 42 are stored in the data region for current processing. The shelf information, the article information, and the out-of-stock flag F related to the most recent previous processing are stored in the data region for previous processing. The shelf information and the article information stored in the data region for current processing are related to the out-of-stock item. That is, the shelf information specifies a section of the shelf where there is an out-of-stock item. The article information specifies an article placed on the section of the shelf where there is an out-of-stock item. In this manner, the history section 43 specifies the out-of-stock item based on the index detected by the analysis section 32.

Meanwhile, the shelf information and the article information stored in the data region for previous processing and not stored in the data region for current processing are related to items that are no longer out of stock. That is, the shelf information specifies the section of the shelf where there is no out-of-stock item. The article information specifies the article placed on the section of the shelf where there is no out-of-stock item.

A timing at which data stored in the data region for current data processing are transferred to the data region for previous processing is not limited to a timing at which new data are provided from the search section 42. Data stored in the data region for current processing may be transferred before that timing.

The processing section 44 checks the out-of-stock flag F of the data stored in the data region for current processing of the history section 43. Then, when the out-of-stock flag F is "0", "0" is changed to "1" by the processing section 44. When the out-of-stock flag F is "1", the out-of-stock flag F is not changed. When a plurality of pieces of data are stored in the data region for current processing, if the out-of-stock flag F is "0" with respect to each of the item data, "0" is changed to "1" by the processing section 44. As a result, in accordance with operation of the processing section 44, all of the out-of-stock flags F for the data stored in the data region for current processing are "1". The processing section 44 controls the search section 42 so as to overwrite the data stored in the data region for current processing in the article database 41. By this control, when the out-of-stock flag F of the data record is "0" in the article database 41, "0" is updated to "1". In this manner, the processing section 44 updates the out-of-stock flag F of the data record detected by the search section 42 from the out-of-stock state to the in-inventory state.

In addition, the processing section 44 deletes data stored in the data region for previous processing, that coincides with the data stored in the data region for current processing, i.e., duplicated data, from the history section 43. As a result of the deletion of the duplicated data, when data remains in the data region for previous processing, the processing section 44 changes the out-of-stock flag F of the item from "1" to "0". Then, the processing section 44 controls the search section 42 to overwrite the data stored in the data region for previous processing in the article database 41. With this control, the out-of-stock flag F of the data record is updated from "1" to "0" in the article database 41.

The image processing device 30 and the article management server 40 having the function as described above configure the out-of-stock item detection device. The out-of-stock item detection system 10 includes the out-of-stock item management device and the camera 20. The out-of-stock item detection device is not limited to a device including the image processing device 30 and the article management server 40. For example, a single electronic device may have both a function of the image processing device 30 and a function of the article management server 40. Alternately, the image processing device 30 may have partially a function of the article management server 40. Similarly, the article management server 40 may have partially a function of the image processing device 30.

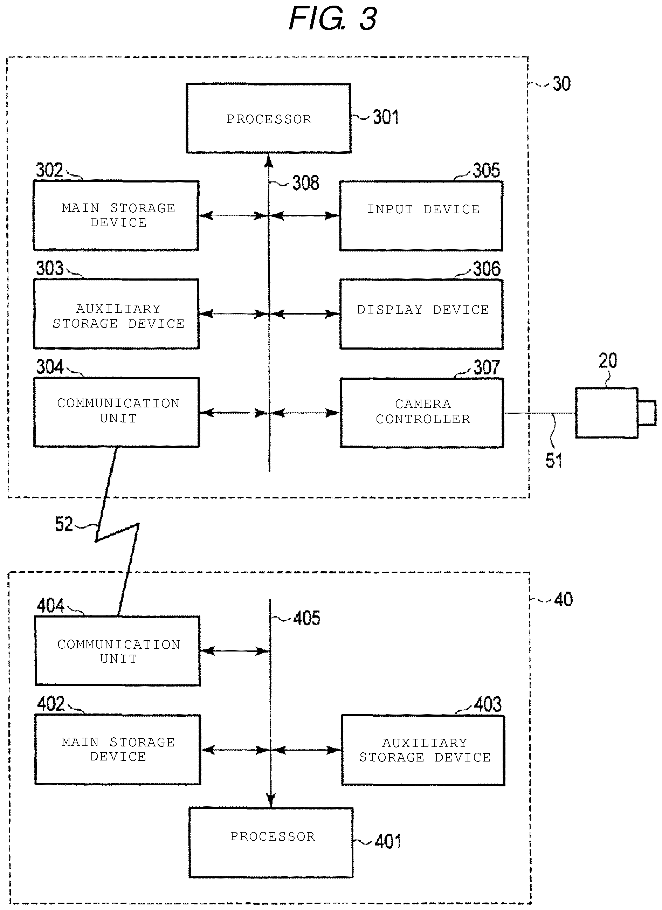

FIG. 3 is a block diagram showing a hardware configuration of the image processing device 30 and the article management server 40. The image processing device 30 includes a processor 301, a main storage device 302, an auxiliary storage device 303, a communication unit 304, an input device 305, a display device 306, the camera controller 307, and the like. The processor 301, the main storage device 302, the auxiliary storage device 303, the communication unit 304, the input device 305, the display device 306, and the camera controller 307 are directly or indirectly connected to each other via a system transmission line 308 including an address bus, a data bus, a control signal line, and the like.

The image processing device 30 configures a computer by the processor 301, the main storage device 302, and the auxiliary storage device 303, and the system transmission line 308 that connects these units.

The processor 301 serves as a central element of the computer. The processor 301 controls each unit so as to perform various functions as the image processing device 30 according to an operating system and an application program.

The main storage device 302 serves as a main storage of the computer. The main storage device 302 includes a non-volatile memory area (read only memory: ROM) and a volatile memory area (random access memory: RAM). The main storage device 302 stores the operating system and the application program in the non-volatile memory area. The main storage device 302 may store data required for performing a process to control each unit by the processor 301, in the non-volatile or volatile memory area. In addition, the main storage device 302 uses the volatile memory area as a work area in which data are appropriately rewritten by the processor 301. The above-described memory is formed in a portion of the work area.

The auxiliary storage device 303 serves as an auxiliary storage of the computer. The auxiliary storage device 303 stores data used for performing various processes by the processor 301 and data generated by a process, in the processor 301. In addition, the auxiliary storage device 303 may store the application program.

The communication unit 304 is an interface of data communication performed through the network 52.

The input device 305 receives an operation input of an operator. For example, a key board, a touch panel, a pointing device, and the like can be used for the input device 305.

The display device 306 displays various kinds of information such as information related to the out-of-stock item and error information. For example, a liquid crystal display, an organic electroluminescence (EL) display, a plasma display, and the like can be used for the display device 306.

The camera controller 307 controls turn on and off of the image-capturing by the camera 20 connected through the communication cable 51. Then, the camera controller 307 obtains image data of an image captured by the camera 20 through the communication cable 51.

The image processing device 30 having such a hardware configuration can be, for example, a personal computer, a tablet terminal, a smartphone, and the like.

The article management server 40 includes a processor 401, a main storage device 402, an auxiliary storage device 403, a communication unit 404, and the like. The processor 401, the main storage device 402, the auxiliary storage device 403, and the communication unit 404 are directly or indirectly connected to each other via a system transmission line 405 including an address bus, a data bus, a control signal line, and the like.

The article management server 40 configures a computer by the processor 401, the main storage device 402, the auxiliary storage device 403, and the system transmission line 405 that connects these units.

The processor 401 serves as a central element of the computer. The processor 401 controls each unit to perform various functions of the article management server 40 according to the operating system and the application program.

The main storage device 402 serves as a main storage of the computer. The main storage device 402 includes a non-volatile memory area (ROM) and a volatile memory area (RAM). The main storage device 402 stores the operating system and the application program in the non-volatile memory area. The main storage device 402 may store data required for performing a process to control each unit by the processor 401 in the non-volatile or volatile memory area. In addition, the main storage device 402 uses the volatile memory area as a work area in which data are appropriately rewritten by the processor 401.

The auxiliary storage device 403 serves as an auxiliary storage of the computer. The auxiliary storage device 403 stores data used for performing various processes by the processor 401 and data generated by a process, in the processor 401. In addition, the auxiliary storage device 403 may store the application program.

The communication unit 404 is an interface of data communication performed through the network 52.

In the present embodiment, the auxiliary storage device 403 stores the article database 41. In addition, the auxiliary storage device 403 includes a data storage area serving as the data region for current processing and the data region for previous processing, which are described above. The auxiliary storage device 403 may not necessarily store the article database 41. Similarly, the auxiliary storage device 403 may not include the data storage area serving as the data region for current processing and the data region for previous processing.

As the article management server 40 achieved by such a hardware configuration, it is also possible to apply not only a host computer dedicated by implementing server software but also a personal computer or the like.

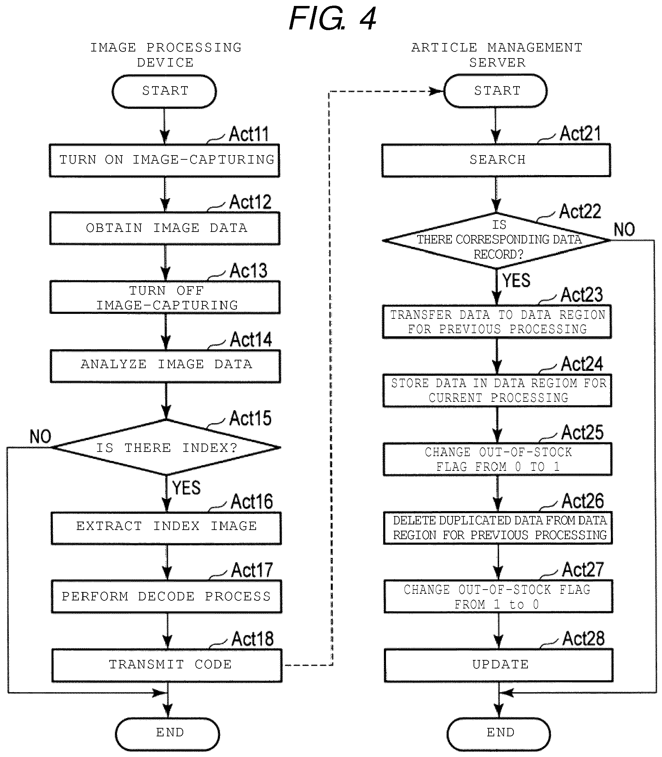

FIG. 4 is a flowchart showing a main procedure of a process performed by the processor 301 of the image processing device 30 and the processor 401 of the article management server 40 based on the control programs, respectively. Hereinafter, a main operation of the image processing device 30 and the article management server 40 will be described with reference to FIG. 4. Content of a process, which will be described below, as well as content shown in FIG. 4 is an example, and various processes capable of obtaining similar results can be appropriately carried out.

In the image processing device 30, the processor 301 starts a process each predetermined period of time (for example, one minute) counted by a timer (not shown). First, the processor 301 notifies the camera controller 307 so as to control the turn on of the image-capturing by the camera 20 in Act11. In response to the notification, the camera controller 307 controls the turn on of the image-capturing by the camera 20. In accordance with this control, the camera 20 performs the image-capturing.

Next, the processor 301 notifies the camera controller 307 that an image is captured in Act12. In response to the notification, the camera controller 307 obtains image data of the image captured by the camera 20. When the image data are obtained, the camera controller 307 writes the image data in a memory of the main storage device 302. Here, the processor 301 cooperates with the camera controller 307 in Act11 and Act12, to serve as the obtaining section 31.

Then, the processor 301 notifies the camera controller 307 so as to control turn off of the image-capturing by the camera 20 in Act13. In response to the notification, the camera controller 307 controls the turn off of the image-capturing by the camera 20. In accordance with this control, the camera 20 stops the image-capturing.

Next, the processor 301 analyzes the image data stored in the memory in Act14. Through this analysis, the processor 301 determines whether or not the two-dimensional data code C that is the index is detected in Act15. When the entirety of the two-dimensional data code C can be detected from the image, the processor 301 determines that the two-dimensional data code C is detected. When at least a portion of the two-dimensional data code C is hidden (by the article or the like), the processor 301 determines that the two-dimensional data code C is not detected. When it is determined that the two-dimensional data code C is not detected (NO in Act15), the processor 301 ends the process.

Meanwhile, when it is determined that the two-dimensional data code C is detected (YES in Act15), the processor 301 extracts data for an image area of the two-dimensional data code C from the image in Act16. Then, the processor 301 decodes the two-dimensional data code C in the image area, and obtains a code in Act17.

If the code is obtained, the processor 301 notifies the communication unit 304 so as to transmit the code to the article management server 40 in Act18. In response to this notification, the communication unit 304 transmits the code obtained by decoding the data of the two-dimensional data code C to the article management server 40 through the network 52. Then, the processor 301 ends the process.

In this manner, the processor 301 performs a function of the analysis section 32 by carrying out the processes of Act14 and Act15 In addition, the processor 301 performs a function of the decode section 33 by carrying out the processes of Act16 to Act18.

The code transmitted from the image processing device 30 is received by the communication unit 404 of the article management server 40. The processor 401 of the article management server 40 starts processing when detecting that the code is received by the communication unit 404. First, the processor 401 searches the article database 41 in Act21. Then, the processor 401 determines presence or absence of the data record including the code, as the inquiry code, received by the communication unit 404 in Act22. When there is no data record (NO in Act22), the processor 401 ends the process.

Meanwhile, when the data record exists (YES in Act22), the processor 401 transfers the data stored in the data region for current processing to the data region for previous processing in Act23. Next, the processor 401 writes the data of the shelf information, the article information, and the out-of-stock flag F of the data record in the data region for current processing in Act24.

The processor 401 rewrites the out-of-stock flag F from "0" to "1" with respect to data of which out-of-stock flag F is "0" among the data stored in the data region for current processing in Act25. In addition, the processor 401 deletes data that coincides with the data stored in the data region for current processing among the data stored in the data region for previous processing in Act26. Then, when the data remains in the data region for previous processing, the processor 401 rewrites the out-of-stock flag F of the data from "1" to "0" in Act27. Then, the processor 401 updates the article database 41 in the data region for current processing and the data region for previous processing in Act28. As a result of this processing, the out-of-stock flag F of the data record of which data in the data region for current processing and the shelf information and the article information coincide with each other is updated from "0" to "1". In addition, the out-of-stock flag F of the data record of which data in the data region for previous processing and the shelf information and the article information coincide with each other is updated from "1" to "0". Then, the processor 401 ends the process.

In this manner, the processor 401 serves as the search section 42 by carrying out the processes of Act21 and Act22. In addition, the processor 401 serves as the history section 43 in cooperation with the auxiliary storage device 403 by carrying out the processes of Act23 and Act24. Furthermore, the processor 401 serves as the processing section 44 by carrying out the processes of Act25 to Act28.

As described above, in the present embodiment, the image processing device 30 controls the camera 20 such that the shelf 60 on which the articles A1, A2, A3, and A4 are placed is image-captured from the front. Then, when the two-dimensional data code C is included in the captured image without being hidden by the article or the like, the image processing device 30 and the article management server 40 detect the out-of-stock item based on the code obtained by decoding data of the two-dimensional data code C. For that reason, when there is no out-of-stock item, it is necessary that the entirety of the two-dimensional data code C is not included in the image captured by the camera 20. Therefore, an image-capturing condition of the camera 20 and an attachment position of the two-dimensional data code C are important in the present embodiment.

As for the camera 20, as described above, the image-capturing condition such as a location height, the distance from the shelf 60 and an angle of view is determined so that the entire front surface of the shelf 60 is within an image-capturing range P. Meanwhile, when the article is placed within the section, although at least a portion of the attachment position of the two-dimensional data code C is hidden by the article, the section becomes an area which is not hidden by a shelf plate or the like when there is the out-of-stock item. Such an area can be obtained based on the image-capturing condition of the camera 20, a height and a width of the article, a height and a depth of the shelf 60, and the like. When an image of the two-dimensional data code C is captured, an auxiliary illumination is provided and a focal length of the camera 20 is maintained at an appropriate value so as to be capable of correctly decoding the two-dimensional data code C by the decode section 33 and to capture the two-dimensional data code C with sufficient resolution.

As described above, by appropriately setting the image-capturing condition of the camera 20 and the attachment position of the two-dimensional data code C, it is possible to reliably detect the out-of-stock item efficiently using the two-dimensional data code C, according to the present embodiment.

In the present embodiment, for each article placed on the shelf 60, the article database 41 including the data record where the code represented by the two-dimensional data code C that appears when the article is out of stock and the out-of-stock flag F indicating whether or not there is the out-of-stock item are associated with each other is provided. For that reason, it is possible to easily obtain a list of the articles that are out of stock based on the data record saved in the article database 41. For example, by displaying the list on the display device 306 of the image processing device 30, it is possible to inform the user of the list. An output destination of the list is not limited to the display device 306. For example, it is possible to output the list to a mobile terminal carried by the user, and also output the list to a point of sales (POS) terminal if in a store.

In addition, in the present embodiment, the two-dimensional data code C is used as the index. It is possible to generate the two-dimensional data code C including, for example, not only the inquiry code but also the shelf information, the article information, and the like. In this case, the article database 41 can be simplified.

The embodiment of the present invention is not limited to the above embodiment.

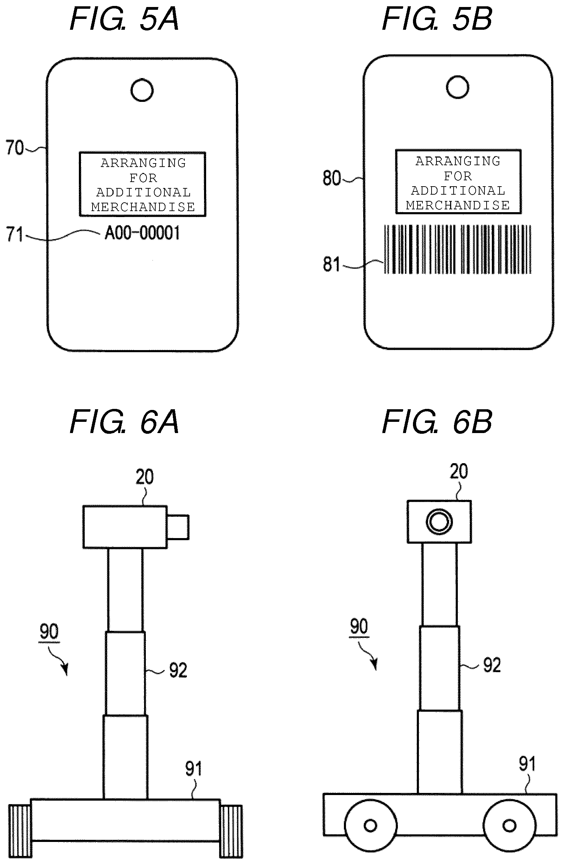

In the above embodiment, the index is processed as the two-dimensional data code C. However, the index is not limited to the two-dimensional data code. For example, as shown in FIG. 5A, a label 70 on which a unique character string reference number 71 is drawn as an optical code may be used as the index. Alternatively, as shown in FIG. 5B, a label 80 on which a one-dimensional bar code 81 is drawn as the optical code may be used as the index. By using the label 70 of the unique character string reference number 71, it is possible to simplify processing in the decode section 33. That is, the decode section 33 may perform an OCR process for an image of the unique character string reference number 71 extracted by the analysis section 32. Meanwhile, when the label 80 of the bar code 81 is used, a laser scanner can be used instead of the camera 20. Since the laser scanner has a good resolution even at a long distance of approximately 10 m, and can stably read information of the bar code 81, it is preferable when a large shelf or a wide range shelf is managed in a bird's eye view, or the like.

In the above embodiment, the camera 20 is located so as to include the entire front surface of the shelf 60 within the image-capturing range P. However, when considering a size of the shelf 60 and the resolution required for the image, the image-capturing range P may not be covered by one camera. In this case, by arranging a plurality of the cameras 20, the entire front surface of the shelf 60 can be included within the image-capturing range P. Alternately, by capturing a plurality of times while moving the camera 20, the entire front surface of the shelf 60 can be included within the image-capturing range P.

FIGs. 6A and 6B are schematic diagrams of a movement mechanism 90 according to another embodiment, on which the camera 20 is mounted. As shown in a front view of FIG. 6A and a side view of FIG. 6B, the camera 20 is mounted on a tip end of a support rod 92 fixed on a platform car 91. The platform car 91 freely moves forward or backward in parallel on a floor surface. The support rod 92 freely extends in a vertical direction on the floor surface. The movement mechanism 90 includes the platform car 91 and the support rod 92. Since the camera 20 is mounted on the movement mechanism 90 having such a configuration, it is possible to capture the entire front surface of the shelf 60 while maintaining positional relationship between the camera 20 and the shelf 60 in an appropriate state. In this case, the image processing device 30 can perform image-capturing efficiently because the captured image can be processed sequentially.

The movement mechanism 90 is not limited to the mechanism shown in FIG. 6. For example, a structure that moves a camera suspended from a rail provided on the ceiling along the rail, may be employed. In addition, the platform car 91 may also be a hand-held type platform car, and may be an unmanned vehicle that automatically runs while tracing a predetermined trajectory. Furthermore, the platform car 91 may be a fully unmanned system in which a camera 20 is mounted on an autonomous mobile robot so as to be capable of autonomously controlling the movement of the camera 20 and the image-capturing by the camera 20.

When the movement mechanism 90 is used, a periodic surveillance of the out-of-stock item can be carried out. For example, the system can be configured as an automated system that is capable of performing the periodic surveillance at the end of business at a warehouse or at night when the store is closed, or the like.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A system for managing inventory based on captured images, comprising:
an image capturing device;
a data storage; and
a processing device configured to process image data of one or more images of an inventory space for items of a same type captured by the image capturing device, and to extract, from the captured images, an identification code or a code symbol that is unique to the items and placed behind the inventory space when viewed from the image capturing device, wherein
when the processing device is able to extract the entire identification code or the entire code symbol, the processing device causes an update of an inventory record stored in the data storage to indicate that the items are out of stock if the inventory record for the items are present.

2. The system according to claim 1, wherein
when processing device cannot extract the entire identification code or code symbol, the processing device causes an update of the inventory record to indicate that the items are in inventory if the inventory record indicates that the items are out of stock.

3. The system according to claim 1 or 2, wherein
the code symbol, not the identification code, is presented behind the space, and
the processing device determines the ID of the items by decoding data of the extracted code symbol.

4. The system according to any one of claims 1 to 3, wherein
the identification code or code symbol is positioned so that at least part of the identification code or code symbol is hidden from image capturing by the image capturing device when at least one item is placed in the inventory space.

5. The system according to any one of claims 1 to 4, further comprising:
a moving mechanism to which the image capturing device is attached, and configured to move an angle of the image capturing device.

6. The system according to any one of claims 1 to 5 further comprising:
a moving mechanism to which the image capturing device is attached, and configured to move a position of the image capturing device.

7. A method for managing inventory based on captured images, comprising:
generating image data of one or more images of an inventory space for items of a same type, the one or more images being captured by an image capturing device;
processing the image data to extract, from the captured images, an identification code or a code symbol that is unique to the items and placed behind the inventory space when viewed from the image capturing device; and
when the entire identification code or code symbol is extracted through processing of the image data, updating an inventory record to indicate that the items are out of stock if the inventory record for the items are present.

8. The method according to claim 7, further comprising:
when the entire identification code or code symbol is not extracted through processing of the image data, updating the inventory record to indicate that the items are in inventory if the inventory record indicates that the items are out of stock.

9. The method according to claim 7 or 8, wherein
the code symbol, not the identification code, is presented behind the space, and
the ID of the items is determined by decoding data of the extracted code symbol.

10. The method according to claim 9, wherein the code symbol is a two-dimensional code symbol.

11. The method according to any one of claims 7 to 10, further comprising:
placing the items in the space, such that at least part of the identification code or code symbol is hidden from image capturing by the image capturing device when at least one item is placed in the inventory space.

12. The method according to any one of claims 7 to 11, further comprising:
moving an angle of the image capturing device, so that an image of the inventory space is captured at a different angle.

13. The method according to any one of claims 7 to 12, further comprising:
moving a position of the image capturing device, so that an image of the inventory space is captured at a different position.

14. A non-transitory computer readable medium comprising a program that is executable in a computing system to cause the computing system to perform the method according to any one of claims 7 to 13 for managing inventory based on captured images.

15. A computer program product comprising program code means stored on a computer readable medium for performing the method according to any one of claims 7 to 13 when the program product is run on a computer.
